# EUROPEAN PATENT SPECIFICATION

(11) **EP 0 827 556 B1**
(45) Date of publication and mention of the grant of the patent: **02.02.2000**
(21) Application number: 96914324.7
(22) Date of filing: 20.05.1996
(51) Int. Cl.: D04H 13/00

(54) **REINFORCED FABRICS**
ARMIERUNGSSTOFFE
TISSUS RENFORCES

(30) Priority: 18.05.1995 GB 9510092
(43) Date of publication of application: 11.03.1998
(73) Proprietor: BWC Textiles Limited, Maghera BT46 5RZ, County Londonderry (GB)
(72) Inventor: CLARK, William Stephen Patrick, Maghera BT46 5RZ, County Londonderry (GB)
(74) Representative: McCarthy, Denis Alexis
(86) International application number: GB9601211
(87) International publication number: WO9636759

(56) References cited:
- EP-A- 0 482 918
- DE-A- 1 560 778
- US-A- 4 522 863

## Description

This invention relates to reinforced fabrics, particularly but not exclusively felts including filtering felts, and a process for preparing reinforced fabrics.

Reinforced fabrics are those fabrics which include some form of reinforcing to strengthen them. They are usually non-woven fabrics, such as carpets, interlinings, felts and some clothes. One particular example is filtering felt for the filtration of gases, liquids and small particles. Filtering felt usually comprises two layers of fleece needled onto each side of a scrim, the scrim being a basecloth of woven yarns (hereinafter referred to as a "woven scrim").

According to one aspect of the present invention, there is provided a reinforced fabric comprising one or more layers of fabric material backed by or sandwiching one or more cross-laid yarn-based scrims, wherein the yarns in the or each scrim are non-woven and non-bonded, and the or each fabric layer and the or each scrim are needlepunched together.

The use of a non-woven scrim provides at least two advantages over a woven scrim. Firstly, because yarns are stronger under tension when wholly or substantially straight, as opposed to being in a woven configuration, a fabric having a non-woven scrim is stronger in the plane of the fabric than a fabric having a woven scrim using the same yarns for each scrim. If the same strength or dimensional stability is required for each fabric, the non-woven scrim can therefore use thinner or fewer yarns per metre, thus also saving on the amount of yarn required.

The second advantage is the simplification in the manufacture of scrims. Weaving any material at an industrial production rate requires large weaving looms, and is time consuming. In contrast, a non-woven scrim merely requires the overlaying of one series of yarns across another series of yarns, etc.

It is pointed out that non-woven scrims for electret webs and made from short and/or randomly formed fibres that are glued, needled or thermo-bonded together are known from e.g. WO 93/16783. However, the use of short and/or randomly formed fibres still requires preparation and organisation and some form of bonding together. The term "non-woven scrim" as used otherwise herein defines a scrim formed from yarns of 'continuous' or 'elongated' fibres or filaments that are arranged into a regular structure, such as a 'network'.

Non-woven scrims provide the same degree of dimensional stability to the finished fabric as woven scrims because the method of conjoining the fabric material and scrims together, needlepunching, provides the same high degree of fastening therebetween.

Non-woven scrims may be prepared by any process comprising the overlaying of one series of yarns across another series of yarns. Further crosslayers of yarns are added where necessary or desired. The yarns are used in a non-bonded or loose state as the conjoining action will fasten all the fabric material and scrim layers together. The number of yarns per metre in the non-woven scrim could be similar to the number used in a woven scrim, eg. 6/7 threads per centimetre.

The number of layers of fabric material and the number of non-woven scrims (each sandwiched between two layers of fabric material) used or required depends upon the fabric being made. For filtering felt, there are usually two layers of fabric material and one sandwiched scrim.

The fabric material and non-woven scrims may be made of any suitable starting materials, whether natural or synthetic. The term 'fabric material' as used herein includes any woven or non-woven material, including fleeces, cloths, suede, pile, etc. Fleeces for filtering felts can be for example 3 d'tex polyester fibres. For scrims for filtering felts, polyester yarns can be used of e.g. 1100 d'tex.

The reinforced fabric of the present invention may be prepared using known procedures and techniques, wherein the non-woven scrim replaces the heretofore woven scrim. The fabric is particularly suitable for use as a needle or technical felt, especially a filtering felt

According to a second aspect of the present invention, there is provided a process for preparing a reinforced fabric comprising one or more layers of fabric material backed by or sandwiching one or more scrims, the yarns in the or each scrim being non-woven and non-bonded, comprising the steps of:
(a) cross-laying warp and weft yarns online to form the or each scrim;
(b) laying one or more layers of fabric alongside the or each scrim; and
(c) conjoining the or each layer of fabric with the or each scrim by needlepunching.

The scrim(s) may be formed in a manner similar to that shown in GB 2231344A. That is, the warp yarns of the scrim are fed out longitudinally, whilst the weft yarns are laid transversely thereon (along with further layers of warp or weft yarns as desired). However, rather than bonding the yarns together as required in GB 2231344A (for subsequent transportation to their place of usage), the cross-laid yarns are fed directly into a needlepuncher along with the layers of fabric as part of the present process. The weight of the yarns and layers of fabric materials keep the yarns in position prior to punching. The reinforcement provided by the scrim(s) is therefore still present in the fabric prepared, although the fibres of the fabric materials are mostly conjoined with each other (through the scrim(s)) rather than to the scrim(s) themselves.

Preparation of the scrim(s) on-line allows for simplified manufacture. Any new or change in width and construction of scrim required for the preparation of a different fabric can be made on-line by simple adjustment of the yarn feeds, rather than needing to have all the different types of prepared scrim in stock, and needing to feed in the new scrim(s). Moreover, the cost of buying only the yarns required rather than prepared scrims can be as much as 25% less, creating a significant saving in the overall cost of the fabric.

Embodiments of the present invention will now be described by way of example only and with reference to the accompanying drawings in which:-
Fig. 1 is a section of a woven scrim of the prior art;
Fig. 2 is a section of a non-woven scrim for use in the present invention; and
Fig. 3 is a schematic side view of an overall flow diagram for the process for preparation of a filtering felt according to the present invention.

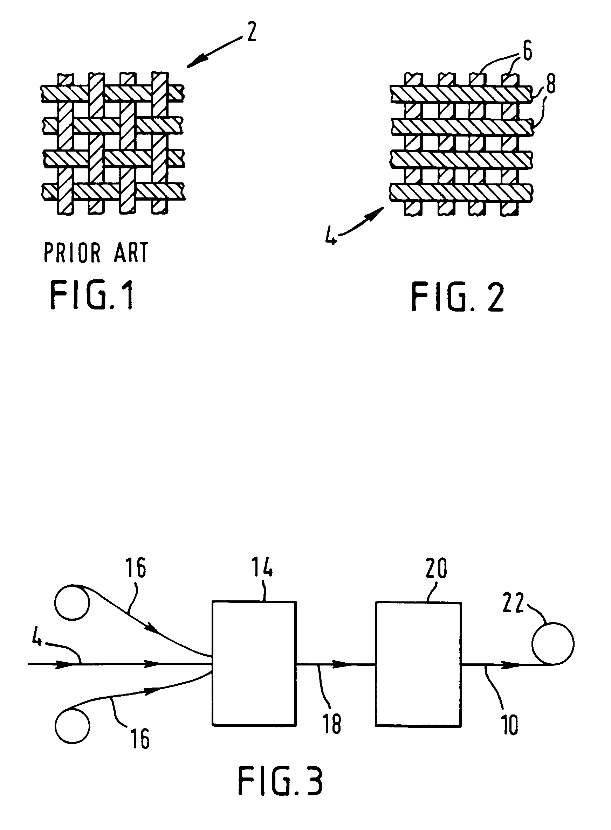

Referring to the drawings, Fig. 1 shows a section of a woven scrim 2 as heretofore used, e.g. in the production of filtering felt. Fig. 2 shows a section of a non-woven scrim 4 for use in preparing a reinforced fabric according to the present invention. The non-woven scrim 4 comprises one length of warp yarns 6 and a series of cross-laid weft yarns 8.

Fig. 3 is an overall flow diagram for the production of a polyester filtering felt 10. The flow diagram is simplified. A non-woven scrim 4 made from polyester yarns is prepared on-line. The cross-layering of the yarns may be prepared by a process described in GB 2231344A. However, the yarns of the scrim are not bonded, but held in position by their weight and the weight of the fleeces 16 being layered therewith. The yarns are not therefore distorted before being punched despite being non-bonded.

The scrim 4 is fed into a first needleloom 14 along with polyester fleeces 16 introduced thereover and thereunder. The three layers are needlepunched and pressed together. The resultant felt 18 is introduced into a second needleloom 20 for further needlepunching and pressing. This produces a filtering felt 10 (collected on a drum 22) of increased strength and similar dimensional stability compared with a filtering felt having a woven scrim made of the same yarns.

Variations and modifications can be made without departing from the scope of the invention claimed.

## Claims

1. A reinforced fabric comprising one or more layers of fabric material backed by or sandwiching one or more cross-laid yarn-based scrims, wherein the yarns in the or each scrim are non-woven and non-bonded, and the or each fabric layer and the or each scrim are needlepunched together.

2. A fabric as claimed in Claim 1 wherein the number of yarns per metre in the or each scrim wholly or substantially corresponds with the number used in prior art woven scrims.

3. A fabric as claimed in Claim 1 or Claim 2 comprising two layers of fabric material and one sandwiched scrim.

4. A fabric as claimed in any one of the preceding Claims for use as a filtering felt.

5. A process for preparing a reinforced fabric comprising one or more layers of fabric material backed by or sandwiching one or more scrims, the yarns in the or each scrim being non-woven and non-bonded, comprising the steps of:
(a) cross-laying warp and weft yarns online to form the or each scrim;
(b) laying one or more layers of fabric alongside the or each scrim; and
(c) conjoining the or each layer of fabric with the or each scrim by needlepunching.

6. A process as claimed in Claim 5 wherein the fabric comprises two layers of fabric and one sandwiched scrim.

7. A reinforced fabric having one or more scrims substantially as herein described with reference to Fig. 2.

8. A process for preparing a reinforced fabric substantially as herein described with reference to Fig. 3.

## Patentansprüche

1. Schichtstoff aus mindestens einer Schicht eines Flächengebildes und mindestens einem dazwischen oder darauf angeordneten Fadengitter als Verstärkung, wonach bei dem oder jedem Fadengitter die Fäden nicht miteinander verwebt und auch nicht aneinander fixiert sind und die oder jede Schicht des Flächengebildes und das oder jedes Fadengitter miteinander vernadelt sind.

2. Schichtstoff nach Anspruch 1, wonach die Fadendichte des oder jedes Fadengitters ganz oder weitgehend der von verwebten Fadengittern des Standes der Technik entspricht.

3. Schichtstoff nach Anspruch 1 oder 2 aus zwei Schichten eines Flächengebildes und einem dazwischen angeordneten Fadengitter.

4. Schichtstoff nach einem der vorhergehenden Ansprüche zur Verwendung als Filterstoff.

5. Verfahren zur Herstellung eines Schichtstoffs aus mindestens einer Schicht eines Flächengebildes und mindestens einem dazwischen oder darauf angeordneten Fadengitter als Verstärkung, wobei bei dem oder jedem Fadengitter die Fäden nicht miteinander verwebt und auch nicht aneinander fixiert sind, bei dem man:
(a) zur Bildung des oder jeden Fadengitters Kett- und Schußfäden laufend kreuzweise übereinanderlegt,
(b) neben dem oder jedem Fadengitter mindestens eine Schicht des Flächengebildes anordnet sowie
(c) die oder jede Schicht des Flächengebildes mit dem oder jedem Fadengitter durch Nadeln verbindet.

6. Verfahren nach Anspruch 5, wonach der Schichtstoff aus zwei Schichten eines Flächengebildes und einem dazwischen angeordneten Fadengitter besteht.

7. Schichtstoff mit mindestens einem Fadengitter, im wesentlichen wie hier unter Bezugnahme auf Figur 2 beschrieben.

8. Verfahren zur Herstellung eines Schichtstoffs, im wesentlichen wie hier unter Bezugnahme auf Figur 3 beschrieben.

## Revendications

1. Tissu renforcé comprenant une ou plusieurs couches de matériau en tissu, garni d'une ou de plusieurs mousselines croisées à base de fil, ou prenant celles-ci en sandwich, dans lequel les fils dans la ou chaque mousseline sont non tissés et non liés, et la ou chaque couche de tissu et la ou chaque mousseline sont aiguilletées ensemble.

2. Tissu suivant la revendication 1, dans lequel le nombre de fils par mètre dans la ou chaque mousseline correspond totalement ou pratiquement au nombre utilisé dans les mousselines tissées de l'état antérieur de la technique.

3. Tissu suivant la revendication 1 ou la revendication 2, comprenant deux couches de matériau en tissu et une mousseline prise en sandwich.

4. Tissu suivant l'une quelconque des revendications précédentes, destiné à être utilisé comme feutre filtrant.

5. Procédé de préparation d'un tissu renforcé, comprenant une ou plusieurs couches de matériau en tissu garni d'une ou de plusieurs mousselines, ou prenant celle(s)-ci en sandwich, les fils dans la ou chaque mousseline étant non tissés et non liés, comprenant les étapes de :
a) croisement des fils de chaîne et trame en ligne pour former la ou chaque mousseline;
b) couchage d'une ou de plusieurs couches de tissu le long de la ou de chaque mousseline; et
c) liaison de la ou de chaque couche de tissu avec la ou chaque mousseline par aiguilletage.

6. Procédé suivant la revendication 5, dans lequel le tissu comprend deux couches de tissu et une mousseline prise en sandwich.

7. Tissu renforcé présentant une ou plusieurs mousselines pratiquement tel que décrit dans le présent mémoire en référence à la figure 2.

8. Procédé de préparation d'un tissu renforcé pratiquement tel que décrit dans le présent mémoire en référence à la figure 3.
